# EUROPÄISCHE PATENTSCHRIFT

(11) **EP 0 636 401 B1**
(45) Veröffentlichungstag und Bekanntmachung des Hinweises auf die Patenterteilung: **06.08.1997**
(21) Anmeldenummer: 94106637.5
(22) Anmeldetag: 28.04.1994
(51) Int. Cl.: B01D 61/14, B41F 35/00, B41F 31/02, C02F 1/44, B01D 65/02

(54) **Prozesswasser-Recycling-Anlage und Verfahren**
Process water recycling plant and process
Installation et procédé de recyclage d'eau de traitement

(30) Priorität: 26.07.1993 DE 4325037
(43) Veröffentlichungstag der Anmeldung: 01.02.1995
(73) Patentinhaber: Landmann, Andreas, D-86343 Königsbrunn (DE)
(72) Erfinder: Landmann, Andreas, D-86343 Königsbrunn (DE)
(74) Vertreter: Vetter, Ewald Otto, Dipl.-Ing.

(56) Entgegenhaltungen:
- EP-A- 0 147 568
- WO-A-93/19829
- DE-U- 9 100 350
- GB-A- 2 264 883
- US-A- 5 017 291
- US-A- 5 164 092
- US-A- 5 207 917

## Beschreibung

Die Erfindung betrifft eine Prozeßwasser-Recycling-Anlage gemäß dem Oberbegriff von Anspruch 1, insbesondere für Prozeßwasser von Druckmaschinen.

Die Oberbegriffe der Ansprüche 1 und 5 entsprechen dem Stand der Technik nach der US-A-5 017 291. Diese zeigt ein Verfahren und eine Vorrichtung zur Trennung von Druckfarbe aus Waschwasser einer Druckmaschine. Die Trennung erfolgt durch Ultrafiltration in einer ultrafeinen Filtereinrichtung und danach in einem umgekehrte-Osmose-Membranfilter. Die separierte Farbe oder Tinte hat eine wesentlich dickere Konsistenz als die Waschwasser-Druckfarben-Mischung und wird in der Druckmaschine erneut verwendet. Das von der Druckfarbe getrennte Waschwasser muß als Abfall chemisch aufbereitet und entsorgt werden, wenn es nicht erneut als Waschwasser verwendet werden kann.

Unter dem Begriff "Prozeßwasser" wird hier Flüssigkeit verstanden, welche für "Betriebsprozesse" in Maschinen oder Anlagen benötigt wird. Das Prozeßwasser kann Leitungswasser oder eine Zusammensetzung aus Leitungswasser und Zusatzmitteln wie beispielsweise Alkohol oder Waschmittel sein. "Zusatzstoffe" sind in der Druckindustrie insbesondere Alkohol und Chemikalien zur Befeuchtung von Druckwerkswalzen, zur Reinigung von Druckwerkswalzen oder zur Erzeugung einer bestimmten abstoßenden oder anziehenden Wirkung auf Wasser, Öle oder Farbstoffe. Ein wichtiges Prozeßwasser bei Druckmaschinen ist sogenanntes "Feuchtwasser", welches Alkohol und weitere Zusätze enthält und in Druckmaschinen auf Druckwerkszylinder oder Druckwerkswalzen zur Erzielung bestimmter Druckwerkseigenschaften aufgebracht wird. Das Feuchtwasser wird durch eine Temperiereinrichtung temperiert. Das Feuchtwasser wird den Druckwerkszylindern und/oder einem Feuchtwerk zugeführt und überschüssiges Feuchtwasser wird von diesen Druckwerkszylindern oder dem Feuchtwerk über Durchflußfilter wieder in eine Feuchtwasser-Aufbereitungswanne zurückgeführt. Im Feuchtwasser reichern sich während der Benutzung insbesondere folgende Verschmutzungen an: Druckfarben, Fasern, Papierstaub, Mineralöle, Bakterien und Pilze. Je nach Größe der Druckmaschine zirkulieren zwischen der Aufbereitungswanne und dem Druckwerk zwischen 70 bis 500 l/h. Jede Druckmaschine hat üblicherweise mehrere Druckwerke, so daß beispielsweise 5000 l/h Feuchtwasser zirkulieren können. Es müssen etwa 12 bis 16 l/h an verbrauchtem und verdunstetem Feuchtwasser in die Aufbereitungswanne nachgefüllt werden.

Durch die Erfindung soll ein Verfahren und eine Vorrichtung geschaffen werden, durch welche die Gebrauchsdauer des Prozeßwassers, insbesondere von Feuchtwasser, entscheidend verlängert wird und störende Prozeßwasserbestandteile unter Einhaltung gesetzlicher Umweltvorschriften auf einfache Weise schnell entsorgt werden können.

Das Verfahren und die Vorrichtung sollen es gestatten, das Prozeßwasser zu reinigen, ohne daß lösliche Substanzen in das Prozeßwasser gelangen. Das Verfahren und die Vorrichtung sollen aber auch unbrauchbar gewordenes Prozeßwasser, insbesondere nach Havarien, unter Einhaltung gesetzlicher Umweltvorschriften zur Entsorgung aufbereiten können. Hierbei ist beispielsweise zu beachten, daß der Anteil von Kohlenwasserstoffen kleiner als 10 mg/l sein muß. Die drucktechnisch wichtigen Eigenschaften des Prozeßwassers oder Feuchtwassers, wie beispielsweise Oberflächenspannung, Benetzungsvermögen und pH-Wert müssen erhalten bleiben. Für den Druckprozeß unerwünschte Bestandteile, beispielsweise korrosionsfördernde Substanzen und Partikel-Verunreinigungen, dürfen nicht in das Prozeßwasser gelangen. Ferner soll das Verfahren und die Vorrichtung eine Rückgewinnung von Puffersubstanzen, Alkohol, Bakteriziden und weiteren Hilfsstoffen ermöglichen. Zur Entsorgung von verbrauchtem Prozeßwasser soll es durch feste Spaltmittel auf Betonit-Basis und Oxidationsmittel oder anderen umweltfreundlichen Mitteln aufbereitet werden können.

Diese Aufgabe wird gemäß der Erfindung durch die kennzeichnenden Merkmale von Anspruch 1 gelöst.

Weitere Merkmale der Erfindung sind in den Unteransprüchen enthalten.

Die Erfindung wird im folgenden mit Bezug auf die beiliegenden Zeichnungen anhand einer bevorzugten Ausführungsform als Beispiel beschrieben. Die Zeichnungen zeigen in
- Fig. 1: schematisch einen Filterteil einer Prozeßwasser-Recycling-Anlage nach der Erfindung zur Aufbereitung von Prozeßwasser, insbesondere Feuchtwasser, einer Druckmaschine, insbesondere einer Offsetdruckmaschine, und
- Fig. 2: schematisch einen Spaltmittelteil der Prozeßwasser-Recycling-Anlage zur Behandlung von Filtrat, welches von dem in Fig. 1 dargestellten Filterteil aus dem Prozeßwasser abgeschieden wurde.

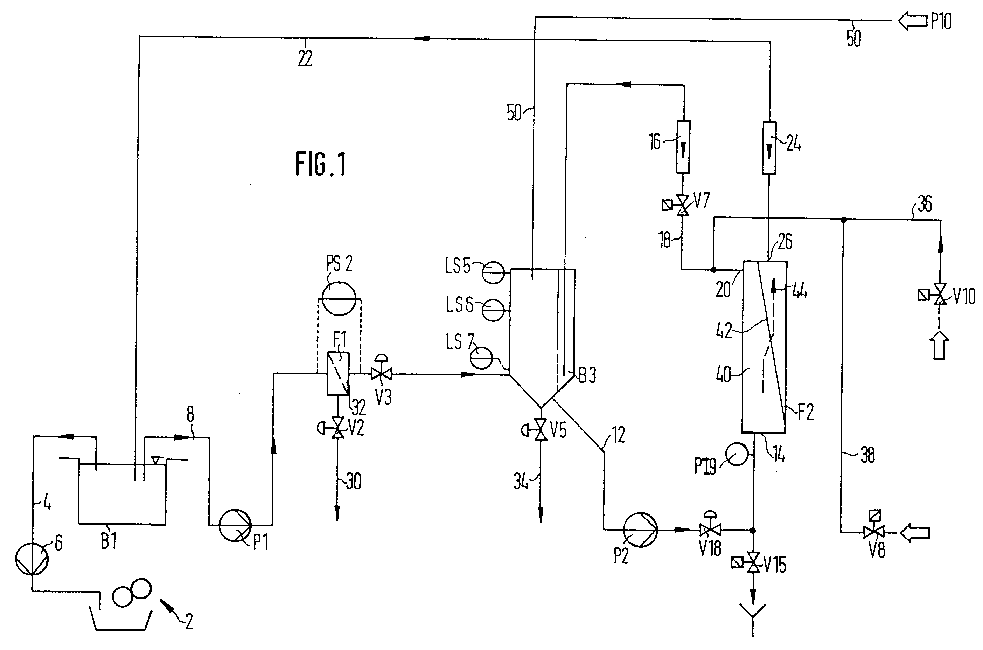

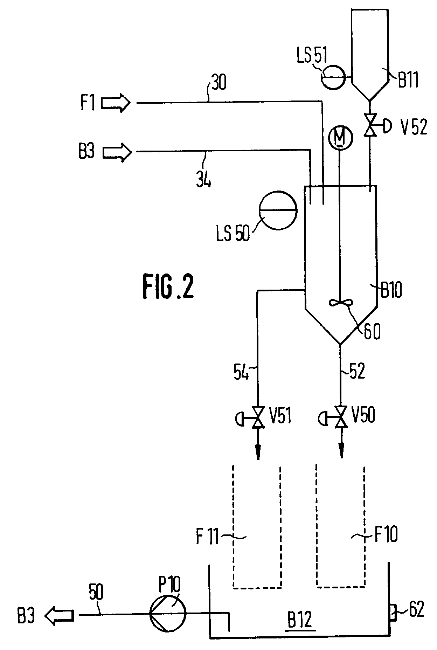

Die in den Figuren 1 und 2 schematisch dargestellte Prozeßwasser-Recycling-Anlage enthält folgende wesentlichen Elemente:
- B1 :: Prozeßwasser-Aggregat
- B3 :: Arbeitsbehälter
- B10:: Reaktionsbehälter
- B11:: Spaltmittel-Behälter
- B12:: Filtrat-Sammelwanne
- F1 :: Filter, beispielsweise Siebfilter, als Vorfilter vor dem Arbeitsbehälter B3
- F2 :: Ultrafeiner Filter in Form eines Crossflow-Filters, welcher ein Membranfilter ist
- F10:: Sediment-Filtersack
- F11:: Klarphasen-Filtersack
- P1 :: Prozeßwasser-Förderpumpe
- P2 :: Druckpumpe zur Erzeugung des Druckes im Crossflow-Filter F2
- P10:: Filtrat-Pumpe
- V2 :: Rückspülventil zur Säuberung des Vorfilters F1 durch Rückspülung
- V3 :: Füllventil zum Füllen des Arbeitsbehälters B3 mit Prozeßwasser
- V5 :: Konzentrat-Ablaßventil zum Ablassen von Konzentrat aus dem Arbeitsbehälter B3
- V7 :: Konzentrat-Ventil zur Rückführung von Konzentrat vom Crossflow-Filter zum Arbeitsbehälter B3
- V8 :: Spülwasser-Einlaßventil zur Ausspülung von Konzentrat aus dem Crossflow-Filter F2
- V10:: Spülluft-Ventil zum Ausspülen des Crossflow-Filters F2 mit Druckluft
- V15:: Spülwasser-Auslaßventil zum Ablassen von Spülwasser aus dem Crossflow-Filter F2
- V18:: Druckpumpen-Ventil im Strömungsweg zwischen Arbeitsbehälter B3 und Crossflow-Filter F2
- V50:: Sediment-Ablaßventil zum Ablassen von Sediment aus dem untersten Ende des Reaktionsbehälters B10
- V51:: Klarphasen-Ablaßventil zum Ablassen der Klarphase aus dem Reaktionsbehälter B10
- V52:: Spaltmittel-Dosierventil zur Abgabe von Spaltmittel aus dem Spaltmittel-Behälter 11 in den Reaktionsbehälter
- M :: Elektromotor zum Antrieb eines Rührwerkes im Reaktionsbehälter B10
- PS2:: Differenzdruckmesser zur Messung des Differenzdruckes zwischen stromaufwärtiger Seite und stromabwärtiger Seite des Vorfilters F1 als Maß für den Vestopfungsgrad des Vorfilters F1
- PI9:: Druckmeßgerät stromaufwärts des Crossflow-Filters F2 zur Messung von seinem Eingangsdruck und damit zur Messung seines Konzentrat-Füllungsgrades
- LS5 :: Niveausensor am Arbeitsbehälter B5 zur Begrenzung seines obersten Füllungspegels
- LS6 :: Niveausensor am Arbeitsbehälter B3 zur Bestimmung seines normalen Füllungspegels bei Normalbetrieb
- LS7 :: Niveasensor am Arbeitsbehälter B3 zur Bestimmung seines niedrigsten Füllungspegles, bei dessen Erreichen auf den normalen Füllungspegel bei dem Niveausensor LS6 aufgefüllt wird.
- LS50:: Niveausensor am Reaktionsbehälter 10 zur Begrenzung seines maximalen Füllungspegels
- LS51:: Niveausensor am Spaltmittel-Behälter zur Begrenzung seines niedrigsten Füllungspegels.

Das Prozeßwasser-Aggregat B1 ist schematisch als Wanne dargestellt, in welcher sich das Prozeßwasser befindet. Das Prozeßwasser besteht im Falle von Feuchtwasser für das Druckwerk einer Druckmaschine aus Wasser, Alkohol und bestimmten, in der Druckindustrie üblichen Zusätzen. Es wird auf einem im wesentlichen konstanten Niveau in Abhängigkeit von Niveausonden gehalten. Im Falle von Feuchtwasser wird das Feuchtwasser einem Feuchtwerk 2 zugeführt, welches es auf ein Druckwerk einer Offsetdruckmaschine überträgt. Eine Zufuhrleitung 4 vom Prozeßwasser-Aggregat B1 zu einem Feuchtwerk 2 enthält eine Pumpe 6. Überschüssiges Feuchtwasser wird vom Feuchtwerk 2 wieder zum Prozeßwasser-Aggregat B1 zurückgeführt. Ein Teil des Prozeßwassers verdunstet. Dadurch muß dem Prozeßwasser-Aggregat B1 ständig frisches Prozeßwasser oder die zu seiner Bildung erforderlichen Bestandteile zugeführt werden. Prozeßwasser wird auch in anderen Teilen einer Druckmaschine benötigt, beispielsweise zur Befeuchtung von Druckplattenzylindern oder Gummituchzylindern oder zum Waschen von Druckmaschinenzylindern. Die Prozeßwasserpumpe P1, der Vorfilter F1 und das Füllventil V3 befinden sich in dieser Reihenfolge in einer Fluidleitung 8, welche das Prozeßwasser-Aggregat B1 strömungsmäßig mit dem Arbeitsbehälter B3 verbindet. Die Druckpumpe P2, das Druckpumpen-Ventil V18 und das Druckmeßgerät PI9 befinden sich in dieser Reihenfolge in einer Fluidleitung 12, welche den Arbeitsbehälter B3 nahe seines unteren Endes mit einem Prozeßwasser-Einlaß 14 des Crossflow-Filters F2 verbindet. Das Konzentratventil V7 und ein Durchflußmengenmesser 16 befinden sich in dieser Reihenfolge in einer Fluidleitung 18, welche einen Konzentratauslaß 20 des Crossflow-Filters F2 mit dem Arbeitsbehälter B3 strömungsmäßig verbindet. Eine Prozeßwasser-Rückführleitung 22, in welcher sich ein Durchflußmengenmesser 24 befindet, verbindet einen Filtratausgang 26 des Crossflow-Filters F2 mit dem Prozeßwasser-Aggregat B1.

Das Rückspülventil V2 befindet sich in einer Rückspülleitung 30, welche die stromaufwärtige Seite 32 des Vorfilters F1 mit dem Reaktionsbehälter B10 strömungsmäßig verbindet. Dadurch kann, wenn der Differenzdruckmesser PS 2 einen bestimmten überhöhten Differenzdruck über dem Vorfilter F1 anzeigt, das Füllventil V3 geschlossen und das Rückspülventil V2 geöffnet werden und dann der Vorfilter F1 in entgegengesetzter Strömungsrichtung mit Prozeßwasser durch das Rückspülventil V2 und die Rückspülleitung 30 hindurch in den Reaktionsbehälter B1 hinein gespült werden. Anschließend wird das Rückspülventil V2 wieder geschlossen und das Füllventil V3 kann wieder geöffnet werden.

Das Konzentrat-Ablaßventil V5 befindet sich in einer Konzentrat-Ablaßleitung 34, welche die unterste Stelle des Arbeitsbehälters B3 mit dem Reaktionsbehälter B10 strömungsmäßig verbindet.

Das Spülluft-Ventil V10 befindet sich in einer Druckluftleitung 36 und das Spülwasser-Einlaßventil V8 befindet sich in einer Wasserleitung 38. Beide Leitungen 36 und 38 sind stromabwärts ihrer Ventile V10 und V8 an den Konzentratauslaß 20 des Crossflow-Filters F2 strömungsmäßig angeschlossen.

In Fig. 1 ist der Strömungsweg des Filtrats 44 durch die Filtermembran 42 zur Prozeßwasser-Rückführleitung 22 durch eine gestrichelte Pfeillinie 44 dargestellt.

Die Filtrat-Sammelwanne B12 wird in Abhängigkeit vom Pegel des sich in ihr sammelnden Filtrats durch die Filtratpumpe P10 chargenweise in den Arbeitsbehälter B3 entleert. Die Filtrat-Pumpe P10 befindet sich in einer Filtratrückleitung 50, welche die Filtrat-Sammelwanne B12 mit dem Arbeitsbehälter B3 strömungsmäßig verbindet.

Das Sediment-Ablaßventil V50 befindet sich in einer Sediment-Ablaßleitung 52, welche sich von einer untersten Stelle des Reaktionsbehälters B10 bis über oder in den Sediment-Filtersack F10 erstreckt, welcher sich in oder über der Filtrat-Sammelwanne B12 befindet. Das Klarphasen-Ablaßventil 51 befindet sich in einer Klarphasen-Ablaßleitung 54, welche den Reaktionsbehälter B10 von einer oberhalb seiner tiefsten Stelle gelegenen Stelle mit dem oberen Ende des Klarphasen-Filtersackes F11 strömungsmäßig verbindet, welcher sich in oder über der Filtrat-Sammelwanne B12 befindet. Dadurch wird aus dem Sediment-Filtersack F10 und/oder dem Klarphasen-Filtersack F11 austretende Flüssigkeit von der Filtrat-Sammelwanne B12 aufgefangen.

Die Erfindung beinhaltet insbesondere die im folgenden aufgeführten Verfahrensschritte.

### Verfahrensteil A:

A1. Das Füllventil V3 wird geöffnet und dadurch kann Prozeßwasser vom Prozeßwasser-Aggregat B1 solange in den Arbeitsbehälter B3 strömen, bis in ihm der Pegel bei dem mittleren Sensor LS6 erreicht ist.
A2. Füllventil V3 wird geschlossen; Prozeßwasser wird aus dem Arbeitsbehälter B3 durch die Druckpumpe P2 bei geöffnetem Druckpumpen-Ventil V18 entnommen und durch den Crossflow-Filter F2 gefördert. Dabei ist das Konzentrat-Ventil V7 geöffnet und die Druckpumpe P2 erzeugt auf der Konzentratseite 40 der Membran 42 einen Fluiddruck, durch welchen Filtrat durch die Membran 42 hindurchgetrieben wird.
A3. Wenn der Prozeßwasser-Pegel im Arbeitsbehälter B3 auf den Pegel seines unteren Niveausensors LS7 abgesunken ist, wird das Füllventil V3 wieder geöffnet und mittels der Prozeßwasser-Förderpumpe P1 Prozeßwasser aus dem Prozeßwasser-Aggregat B1 in den Arbeitsbehälter B3 gemäß vorgenanntem Arbeitsschritt A1 gefördert, wobei während dieser Förderung das Druckpumpen-Ventil V18 geschlossen sein kann, jedoch vorzugsweise offengehalten wird, so daß gleichzeitig Prozeßwasser vom Arbeitsbehälter B3 mittels der Druckpumpe P2 in den Crossflow-Filter F2 gefördert wird.

Hierbei wird der Arbeitsbehälter B3 durch Öffnen und Schließen des Vorfilters V3 diskontinuierlich gefüllt, dann durch den Crossflow-Filter F2 entleert, wieder gefüllt, dann wieder entleert, dann wieder gefüllt usw., jeweils zwischen den beiden Niveausensoren LS 6 und LS7. Dabei strömt durch die Filtermembran 42 des Crossflow-Filters F2 entsprechend dem gestrichelten Pfeil 44 Filtrat, welches über die Prozeßwasser-Rückführleitung 22 in das Prozeßwasser-Aggregat B1 zurückströmt, und gleichzeitig sammelt sich auf der Konzentratseite 40 der Filtermembran 42 Konzentrat an, welches durch das Konzentratventil V7 infolge des Druckes der Druckpumpe P2 in den Arbeitsbehälter B3 zurückgefördert wird. Das Konzentratventil V7 kann kontinuierlich oder diskontinuierlich offen gehalten werden.

Nach einer bestimmten Betriebszeit, deren Dauer von der Verschmutzungsgeschwindigkeit des Prozeßwassers im Prozeßwasser-Aggregat B1 abhängig ist, kann im Arbeitsbehälter B3 nicht mehr weiter aufkonzentriert werden, weil das Konzentrat im Arbeitbehälter B3 zu dick geworden ist. "Aufkonzentriert" bedeutet hier "hinzufügen von Konzentrat". Wenn nicht mehr weiter aufkonzentriert werden kann, werden folgende Verfahrensschritte durchgeführt:
B1. Bei geschlossenem Konzentratventil V7 und geschlossenem Spülwasser-Auslaßventil V15 wird das Spülluft-Ventil V10 geöffnet und dadurch mit Druckluft Konzentrat aus dem Crossflow-Filter F2 rückwärts durch das geöffnete Druckpumpen-Ventil 18 und durch die Druckpumpe P2 hindurch, welche ausgeschaltet wurde, in den Arbeitsbehälter B3 getrieben. Dieser Verfahrensschritt beginnt vorzugsweise dann, wenn im Arbeitsbehälter B3 der Pegel des Prozeßwassers auf dem unteren Niveausensor LS7 steht.
B2. Das Spülluft-Ventil V10 wird geschlossen und das Konzentratventil V7 bleibt geschlossen, das Druckpumpen-Ventil V18 wird geschlossen und das Spülwasser-Auslaßventil V15 wird geöffnet, und das Spülwasser-Einlaßventil V8 wird ebenfalls geöffnet, so daß vom Spülwasser-Einlaßventil V8 her Spülwasser durch den Konzentrat-Auslaß 20 auf der Konzentratseite 40 der Filtermembran 42 in den Crossflow-Filter F2 strömt, über die Filtermembran 42 strömt, und dann durch den Prozeßwasser-Einlaß 14 aus dem Crossflow-Filter F2 strömt und Konzentratreste durch das Spülwasser-Auslaßventil V15 aus dem System hinausspült.
B3. Gleichzeitig mit dem Verfahrensschritt B1 oder anschließend an ihn wird das Konzentrat-Ablaßventil V5 geöffnet und dadurch Konzentrat aus dem Arbeitsbehälter B3 durch dieses Konzentrat-Ablaßventil V5 und die Konzentrat-Ablaßleitung 34 hindurch in den Reaktionsbehälter B10 abgelassen.
B4. Dann können wieder die Verfahrensschritt A1 bis A3 erfolgen, welche sich solange wiederholen können, bis dann wieder die Arbeitsschritte B1, B2 und B3 erforderlich werden.

Nach längerer Betriebszeit muß auch der Vorfilter F1 gereinigt werden. Dies ist dann der Fall, wenn sein Strömungswiderstand durch Verschmutzungen auf einen bestimmten Wert angestiegen ist, was durch den Differenzdruckmesser PS2 festgestellt wird. Bei Erreichen eines bestimmten Differenzdruckwertes werden folgende Verfahrensschritte C durchgeführt:
C1. Schließen des Füllventils V3.
C2. Öffnen des Rückspülventils V2
C3. Pumpen von Prozeßwasser aus dem Prozeßwasser-Aggregat B1 mittels der Prozeßwasser-Förderpumpe P1 rückwärts durch den Vorfilter F1, durch das geöffnete Rückspülventil V2 und die Rückspülleitung 30 in den Reaktionsbehälter B10. Zur "Rückwärtsspülung" des Vorfilters F1 sind am Vorfilter F1 Strömungsumlenkmittel vorgesehen, welche nicht im einzelnen dargestellt sind.
C4. Schließen des Rückspülventils V2, Öffnen des Füllventils V3 und Fördern von Prozeßwasser aus dem Prozeßwasser-Aggregat B1 mittels der Prozeßwasser-Förderpumpe P1 in den Arbeitsbehälter B3 gemäß den Verfahrensschritten A1, A2 und A3.

Im Reaktionsbehälter B10 befindet sich nunmehr über das Konzentrat-Ablaßventil V5 zugeführtes Konzentrat und über das Rückspülventil V2 aus dem Vorfilter F1 zugeführtes verschmutztes Konzentratwasser. Wenn nach beispielsweise drei oder vier Füllungschargen der vorstehend beschriebenen Art aus dem Arbeitsbehälter B3 und dem Vorfilter F1 der Materialpegel im Reaktionsbehälter B10 auf den Pegel beim Niveausensor LS50 angestiegen ist, werden folgende Verfahrensschritte D durchgeführt:
D1. Einschalten des im Reaktionsbehälter B10 angeordneten Rührwerkes 60 durch Einschalten seines Motors M und Hinzufügen einer bestimmt dosierten Menge von Spaltmittel aus dem Spaltmittel-Behälter B11 über das Spaltmittel-Dosierventil V52 in den Reaktionsbehälter B10. "Spaltmittel" sind chemische Hilfsmittel, um Emulsionen des im Reaktionsbehälter B10 befindlichen Prozeßwassers und Prozeßwasser-Konzentrats zu brechen. Solche chemischen Hilfsmittel trennen die festen und flüssigen Bestandteile der Prozeßwasser-Konzentrat-Mischung. Das Prozeßwasser ist im Falle von Feuchtwasser eine Mischung aus Wasser, Alkohol und in der Druckindustrie üblichen Zusatzmitteln.
D2. Aussschalten des Rührwerkes 60; Abschalten der Spaltmittelzufuhr durch Schließen des Spaltmittel-Dosierventils V52 vor oder spätestens mit dem Abschalten des Rührwerkes 60.
D3. Abwarten einer bestimmten Sedimentationszeit, innerhalb welcher sich die festen Bestandteile im Reaktionsbehälter B10 setzen können.
D4. Ablassen des flüssigen Bestandteils, welcher auch als Klarphase bezeichnet wird, aus dem Reaktionsbehälter B10 durch Öffnen des Klarphasen-Ablaßventils V51 über die Klarphasen-Ablaßleitung 54 durch den Klarphasen-Filtersack F11 in die Filtrat-Sammelwanne B12. Die sich dabei in der Filtrat-Sammelwanne B12 ansammelnde Flüssigkeit wird in Abhängigkeit vom Flüssigkeitspegel, welcher durch einen an der Filtrat-Sammelwanne B12 vorgesehenen Niveausensor 62 überwacht wird, von der Filtrat-Pumpe P10 über die Filtratrückleitung 50 in den Arbeitsbehälter B3 zurückgefördert.
D5. Im Reaktionsbehälter B10 abgelagertes Sediment wird über das für den Ablaßvorgang geöffnete Sediment-Ablaßventil V50 der Sediment-Ablaßleitung 52 in den Sediment-Filtersack F10 abgelassen, wobei aus dem Sediment-Filtersack F10 austretende Flüssigkeit von der Filtrat-Sammelwanne B12 aufgefangen wird und in der vorstehend bei Schritt D4. beschriebenen Weise niveaugesteuert von der Filtrat-Pumpe P10 über die Filtratrückleitung 50 in den Arbeitsbehälter B3 zurückgefördert wird.

Die Arbeitsschritte D4. und D5. können gleichzeitig beginnen und/oder enden oder nacheinander ablaufen. Der Anschluß der Klarphasen-Ablaßleitung 54 am Reaktionsbehälter 10 liegt höher als der Anschluß der Sediment-Ablaßleitung 52 am Reaktionsbehälter B10.

Die Verwendung eines ultrafeinen Filters wie beispielsweise die Verwendung eines Crossflow-Filters F2 zur Reinigung von Prozeßwasser von Druckmaschinen hat den Vorteil, daß nicht nur feinste Feststoffpartikel, sondern auch Mikroorganismen zurückgehalten werden und aus dem Prozeßwasser ausgeschieden werden können. Beim Stand der Technik mußten dem Feuchtwasser von Druckmaschinen bisher Biozide hinzugefügt werden, um die unerwünschte Bildung und die unerwünschte Vermehrung von Mikroorganismen zu verhindern. Biozide können auch bei dem Verfahren und der Vorrichtung nach der Erfindung verwendet werden, bei welcher sie jedoch in wesentlich kleinerer Menge oder überhaupt nicht benötigt werden. Dadurch werden die Kosten und die Umweltbelastung wesentlich gesenkt. Der Ultrafilter oder Crossflow-Filter F2 hält auch Papierstaub und im Papier der Druckmaschine vorhandene Kreide, sogenannter Papierstrich und Papierfasern sowie Druckfarbe zurück. Der im Prozeßwasser enthaltene Alkohol geht nicht mit verschmutztem Prozeßwasser/Abwasser verloren, sondern wird ständig zurückgewonnen, da der Alkohol durch die Filtermembran 42 entsprechend dem gestrichelten Pfeil 44 hindurchdringt und über die Prozeßwasserrückführleitung 22 in das Prozeßwasser-Aggregat B1 zurückgelangt. Durch den in Fig. 2 dargestellten Spalt-Anlagenteil werden alle von der Filtermembran 42 des Crossflow-Filters F2 zurückgehaltenen Bestandteile mit einer nur sehr geringen Menge von Chemikalien als Spaltmittel behandelt, ohne daß der Druckprozeß der Druckmaschine gestört wird. Die mit Spaltmitteln des Spaltmittelbehälters B11 im Reaktionsbehälter B10 behandelten Prozeßwasserteile werden nochmals behandelt, indem sie in einen durch die Filtratpumpe P10 in den Filterteil von Fig. 1 zurückgeführten wiederverwendbaren Flüssigkeitsbestandteil und einen durch den Klarphasen-Filtersack F11 und den Sediment-Filtersack F10 ausscheidbaren Feststoffbestandteil zerlegt werden. Durch die Filterwirkung der Filtermembran 42 im Crossflow-Filter F2 können keine Chemikalien vom Spalt-Anlagenteil der Fig. 2 in das Prozeßwasser im Prozeßwasser-Aggregat B1 gelangen. Dies bedeutet, daß der chemische Teil der Anlage vom Prozeßwasser, welches im Prozeßwasser-Aggregat B1 vorhanden ist, völlig getrennt ist.

Die gesamte Prozeßwasser-Recycling-Anlage und das mit ihr durchgeführte Prozeßwasser-Recycling-Verfahren ist zum Prozeßwasser des Prozeßwasser-Aggregats B1 als Bypass angeordnet und das Prozeßwasser wird nur in diesem in den Fig. 1 und 2 dargestellten Bypass aufbereitet. Damit ergeben sich unter anderm folgende Vorteile: wenn in der Prozeßwasser-Recycling-Anlage Störungen auftreten oder die Anlage durch Störungen Betriebsunterbrechungen hat, wird davon der Druckprozeß der Druckmaschine nicht beeinflußt. Da nicht das gesamte Prozeßwasser, welches der Druckmaschine zugeführt wird, durch die Prozeßwasser-Recycling-Anlage geleitet wird, sondern nur ein kleiner Teil davon in dem genannten Bypass-Verfahren, kann die Anlage wesentlich kleiner sein als eine Prozeßwasser-Reinigungsanlage, welche sich im Prozeßwasser-Strömungsweg zwischen dem Prozeßwasser-Aggregat B1 und der Druckmaschine befindet. Selbstverständlich können im Vorlauf und/oder im Rücklauf des Prozeßwassers oder Feuchtwassers zwischen dem Prozeßwasser-Aggregat B1 und dem Druckwerk 2 wie beim Stand der Technik Vorlauffilter und Rücklauffilter enthalten sein. Durch diese Systemtrennung können sich Strömungen in der Druckmaschine auch nicht nachteilig auf die Prozeßwasser-Recycling-Anlage auswirken.

Die von der Prozeßwasser-Recycling-Anlage ausgeschiedenen Abfallstoffe sind keine verschmutzten Flüssigkeiten, sondern im Sediment-Filtersack F10 und im Klarphasen-Filtersack F11 gesammelter Feststoff. Dieser hat ein wesentlich kleineres Volumen und ist wesentlich einfacher transportierbar als eine entsprechende Menge veschmutzter Flüssigkeit. Dabei ist kein oder nur ein äußerst geringer Flüssigkeitsanteil zu entsorgen.

Durch die Verwendung eines Ultra-Filtrations-Verfahrens im Crossflow-Filter F2, welcher im Bypass zum Prozeßwasser-Aggregat B1 diskontinuierlich reinigt, wird die Standzeit oder Brauchbarkeitszeit des Prozeßwassers wesentlich verlängert. Bei dieser Ultrafiltration werden Öle, Kolloide und partikelförmig Verunreinigungen des Prozeßwassers aufkonzentriert oder herausgefiltert, während Alkohol, Komplexbildner und andere gelöste Stoffe durch die Filtermembran des Ultrafiltrationsfilters oder Crossflow-Filters F2 hindurchdringen und wieder in das Prozeßwasser-Aggregat B1 zurückgeführt werden. Die Trenngrenze der Membran 42 kann beispielsweise zwischen 1000 bis 15000 mol liegen. Diese Mol-Trenngrenze 1000 bis 15000 bedeutet, daß Moleküle mit einem Molgewicht zwischen 1000 mol und 15000 mol von der Membran 42 größtenteils zurückgehalten werden. Moleküle größer 15000 mol werden vollständig zurückgehalten, Moleküle kleiner 1000 mol gehen auf alle Fälle durch die Membran 42. Die gemäß der Erfindung verwendete Ultrafiltration wird aufgrund dieser Abtrennung nach Molgewicht, was einer gewissen Molekülgröße entspricht, manchmal auch als Molekül-Sieb bezeichnet.

Die Prozeßwasser-Recycling-Anlage kann als kompakter Schrank ausgebildet sein. Die Anlage kann an neue und auch an bereits installierte Prozeßwasser-Aggregate B1 angeschlossen werden. Die gesamte Prozeßwasser-Recycling-Anlage arbeitet vorzugsweise vollautomatisch mit Hilfe einer Mikroprozessor-Steuerung. Diese steuert alle Ventile und Motoren.

Anstelle eines Crossflow-Filters F2 können auch andere Filtereinrichtungen verwendet werden, welche das Prozeßwasser durch Filterwirkung, ohne daß chemische Zusätze nötig sind, derart in ein Filtrat und ein Konzentrat trennen oder aufspalten, daß das Filtrat im wesentlichen nur die gewünschten Bestandteile des Prozeßwassers enthält und das Konzentrat im wesentlichen alle unerwünschten Bestandteile und gegebenenfalls einen Teil von erwünschten Bestandteilen des Prozeßwassers enthält. Das Filterelement 42 der Filtereinrichtung F2 ist vorzugsweise eine für sauberes Prozeßwasser permeable Membran 42 oder ein in ähnlicher Weise ultrafein-filterndes Element. Die Membran 42 wird von Prozeßwasser überströmt. Der Druck der Druckpumpe P2 erzeugt auf der Konzentratseite 40 der Membran 42 einen Staudruck und drückt die gewünschten Prozeßwasser-Bestandteile durch die Membran 42.

Zur Bildung des Staudruckes auf der Konzentratseite 40 der Membran 42 wird vorzugsweise das Konzentratventil V7 nicht geschlossen, sondern so eingestellt, daß es als Strömungsdrossel wirkt. Dadurch wird die Membran 42 kontinuierlich von Prozeßwasser überströmt und sauber und permeabel gehalten.

## Patentansprüche

1. Prozeßwasser-Recycling-Verfahren, insbesondere für Prozeßwasser von Druckmaschinen wie insbesondere Feuchtwasser oder Waschwasser,
mit folgenden Verfahrensschritten:
1.1. kontinuierliches oder diskontinuierliches Entnehmen eines Teils des Prozeßwassers aus dem Prozeßwassersystem der betreffenden Maschine und Zuführen des entnommenen Prozeßwasserteils zu einer ultrafeinen Filtereinrichtung;
1.2. Trennen des entnommenen Prozeßwassers durch die ultrafeine Filtereinrichtung in Filtrat und in Konzentrat derart, daß das Filtrat im wesentlichen nur alle gewünschten Bestandteile enthält und das Konzentrat im wesentlichen alle unerwünschten Bestandteile des Prozeßwassers und, falls erwünscht oder nicht vermeidbar, einen Anteil von erwünschten Bestandteilen des Prozeßwassers enthält;
gekennzeichnet durch
1.3. Rückführen des Filtrats in das Prozeßwassersystem der Maschine;
1.4. Rückführen des Konzentrats aus der ultrafeinen Filtereinrichtung in den Prozeßwasserweg, welcher vom Prozeßwassersystem zur ultrafeinen Filtereinrichtung führt, und gemeinsames Zuführen des rückgeführten Konzentrats und von Prozeßwasser in die ultrafeine Filtereinrichtung, wobei diese Rezirkulation von Konzentrat und einem Prozeßwasseranteil durch die ultrafeine Filtereinrichtung mehrmals wiederholt werden kann;
1.5. Überführen des Konzentrats, wenn sich eine vorbestimmte Menge oder Dichte an Konzentrat gebildet hat, aus dem Konzentrat-Rezirkulationskreislauf zu einer Spaltanlage;
1.6. Trennen des Konzentrats in der Spaltanlage durch Hinzufügen von chemischem Spaltmittel in eine Feststoffphase und eine flüssige Klarphase;
1.7. Rückführen der flüssigen Klarphase in den Prozeßwasserweg, welcher vom Prozeßwassersystem zur ultrafeinen Filtereinrichtung führt;
1.8. Ausscheiden der Feststoffphase aus dem Verfahren nach Erreichen einer bestimmten Feststoffmenge.

2. Prozeßwasser-Recycling-Verfahren nach Anspruch 1,
**dadurch gekennzeichnet**, daß vor dem Überführen des Konzentrats gemäß Verfahrensschritt 1.5 das Konzentrat aus der ultrafeinen Filtereinrichtung mittels Druckluft in einen Arbeitsbehälter zurückgedrängt wird, welcher sich im Prozeßwasserweg vom Prozeßwassersystem zur ultrafeinen Filtereinrichtung befindet, und daß das Konzentrat dann gemäß Verfahrensschritt 1.5 aus diesem Arbeitsbehälter in die Spaltanlage gefördert wird.

3. Prozeßwasser-Recycling-Verfahren nach Anspruch 1 oder 2,
**dadurch gekennzeichnet**, daß die ultrafeine Filtereinrichtung, nachdem das Konzentrat vor oder während des Verfahrensschrittes 1.5 aus der ultrafeinen Filtereinrichtung entfernt wurde, mit Wasser gespült wird.

4. Prozeßwasser-Recycling-Verfahren nach Anspruch 3,
**dadurch gekennzeichnet**, daß die ultrafeine Filtereinrichtung wechselweise mit Wasser und Druckluft gespült wird.

5. Prozeßwasser-Recycling-Anlage, insbesondere für Prozeßwasser von Druckmaschinen, insbesondere Feuchtwasser und Waschwasser, mit
folgenden Merkmalen:
5.1. einen Prozeßwasserweg (8, P1, 32, V3, B3, 12, P2, V18, 14) zur kontinuierlichen oder diskontinuierlichen Entnahme eines Teiles des Prozeßwassers aus dem Prozeßwassersystem (B1) der betreffenden Maschine und Zuführen des entnommenen Prozeßwasserteils zu einer ultrafeinen Filtereinrichtung (F2);
5.2. die ultrafeine Eiltereinrichtung (F2) ist so ausgebildet, daß sie durch Siebwirkung, ohne daß chemische Reaktionsmittel erforderlich sind, eine Aufspaltung des Prozeßwassers in Filtrat und Konzentrat bewirkt, von welchen das Filtrat im wesentlichen nur alle gewünschten Bestandteile des Prozeßwassers enthält und das Substrat im wesentlichen alle unerwünschten Bestandteile des Prozeßwassers und, falls erwünscht oder nicht vermeidbar, einen Anteil von erwünschten Bestandteilen des Prozeßwassers enthält;
gekennzeichnet durch
5.3. eine Prozeßwasser-Rückführleitung (22) von der Filtratseite (44) der ultrafeinen Filtereinrichtung (F2) zum Prozeßwassersystem (B1) der betreffenden Maschine zur Rückführung des Filtrats in das Prozeßwassersystem;
5.4. eine Konzentrat-Rückführleitung (18) zur Rückführung des Konzentrats von der Konzentratseite (40) der ultrafeinen Filtereinrichtung (F2) in den Prozeßwasserweg (8, B1, E1, V3, B3, 12, P2, V18, 14) an einer Stelle, wo sie mit Prozeßwasser, welches sich in diesem Prozeßwasserweg befindet, vermischt wird und dann zusammen mit diesem Prozeßwasser wieder der ultrafeinen Filtereinrichtung (F2) auf ihrer Konzentratseite zugeführt wird;
5.5. eine Konzentrat-Abflußleitung (34) zum Überführen des Konzentrats, wenn sich eine vorbestimmte Menge oder Dichte an Konzentrat gebildet hat, aus dem Konzentrat-Rezirkulationskreislauf zu einer Konzentrat-Spaltanlage (B10, B11, B12);
5.6. die Spaltanlage enthält einen Reaktionsbehälter (B10), in welchem das Konzentrat mit chemischem Spaltmittel vermischt wird, welches das Konzentrat in eine Feststoffphase und in eine flüssige Klarphase chemisch trennt;
5.7. eine Filtrat-Rückführleitung (50) zur Rückführung der flüssigen Klarphase der Spaltanlage in den Prozeßwasserweg (8, P1, F1, V3, B3, 12, P2, V18, 14), welcher vom Prozeßwassersystem (B1) zur ultrafeinen Filtereinrichtung (F2) führt;
5.8. Mittel (V50, F10, V51, F11) zum Ausscheiden der Feststoffphase aus der Prozeßwasser-Recycling-Anlage, nachdem eine bestimmte Menge Feststoff angefallen ist.

6. Prozeßwasser-Recycling-Anlage nach Anspruch 5,
**dadurch gekennzeichnet**, daß an dem Konzentrat-Ausgang (20) der ultrafeinen Filtereinrichtung (F2) eine Druckluftleitung (36) strömungsmäßig angeschlossen ist, durch deren Druckluft das Konzentrat in Richtung vom Konzentratauslaß (20) zum Prozeßwassereinlaß (14) aus der Filtereinrichtung (F2) heraus zurück in einen Arbeitsbehälter (B3) gedrängt werden kann, welcher sich im Prozeßwasserweg zwischen dem Prozeßwassersystem (B1) und der Filtereinrichtung (F2) befindet, und daß vom unteren Ende des Arbeitsbehälters (B3) eine Konzentrat-Ablaßleitung (34) zur Spaltanlage (B10, B11, B12) führt, über welche das Konzentrat in die Spaltanlage gefördert werden kann.

7. Prozeßwasser-Recycling-Anlage nach Anspruch 6,
**dadurch gekennzeichnet**, daß an den Konzentratauslaß (20) der ultrafeinen Filtereinrichtung (F2) eine Druckwasserleitung (38) strömungsmäßig angeschlossen ist, durch welche Wasser vom Konzentratauslaß (20) zum Prozeßwassereinlaß (14) auf der Konzentratseite (40) durch die Filtereinrichtung (F2) zur Spülung dieser Filtereinrichtung hindurchgefördert werden kann.

8. Prozeßwasser-Recycling-Anlage nach einem der Ansprüche 5 bis 7,
**dadurch gekennzeichnet**, daß die ultrafeine Filtereinrichtung (F2) ein Crossflow-Filter ist, in welchem das Prozeßwasser das Filterelement (42) überströmt und durch einen Staudruck des Prozeßwassers ein Filtrat des Prozeßwassers durch das Filterelement hindurchdringt.

9. Prozeßwasser-Recycling-Anlage nach einem der Ansprüche 5 bis 8,
**dadurch gekennzeichnet**, daß die ultrafeine Filtereinrichtung (F2) eine Filtermembran (42) als Filterelement enthält.

10. Prozeßwasser-Recycling-Anlage nach einem der Ansprüche 6 bis 9,
**dadurch gekennzeichnet**, daß stromaufwärts und stromabwärts des Arbeitsbehälters (B3) im Prozeßwasserweg je eine Pumpe (P1, P2) angeordnet ist.

11. Prozeßwasser-Recycling-Anlage nach einem der Ansprüche 5 bis 10,
**dadurch gekennzeichnet**, daß im Prozeßwasserweg zwischen dem Prozeßwassersystem (B1) und der ultrafeinen Filtereinrichtung (F2) ein Vor-Filter (32) stromaufwärts der Stelle angeordnet ist, wo das Konzentrat in diesen Prozeßwasserweg zurückgeführt wird.

## Claims

1. Process water recycling process, especially for process water from printing presses, such as in particular fountain water or wash water, consisting of the following process stages:
1.1 continuous or intermittent removal of some of the process water from the process water system of the press in question and the supply of the removed part of the process water to an ultra-fine filtering device;
1.2 separation of the process water removed through the ultra-fine filtering device into filtrate and concentrate such that the filtrate contains essentially only all the desirable constituents and the concentrate contains essentially all the undesirable constituents of the process water and, where desirable or not avoidable, a proportion of the desirable constituents of the process water;
characterised by
1.3 the return of the filtrate to the process water system in the press;
1.4 the return of the concentrate from the ultra-fine filtering device in the process water circuit, which leads from the process water system to the ultra-fine filtering device and the supply of the recycled concentrate together with the process water to the ultra-fine filtering device, whereby this recirculation of concentrate and a proportion of the process water through the ultra-fine filtering device can be repeated several times;
1.5 the transfer of concentrate, when a predetermined quantity or density of concentrate has been produced, from the concentrate recirculation circuit to a disintegration system;
1.6 the separation of the concentrate in the disintegration system by adding chemical disintegrants to a solid phase and a liquid clear phase;
1.7 the return of the liquid clear phase to the process water circuit which leads from the process water system to the ultra-fine filtering device;
1.8 the segregation of the solid phase from the process once a set quantity of solids has been obtained.

2. Process water recycling method according to Claim 1, characterised in that before the concentrate is transferred as described in process stage 1.5, it is forced back, by means of compressed air, out of the ultra-fine filtering device into an operating tank which is located in the process water circuit from the process water system to the ultra-fine filtering device, and that the concentrate is then delivered, as described in process stage 1.5, from this operating tank to the disintegration system.

3. Process water recycling method according to Claim 1 or 2, characterised in that, after the concentrate has been removed from the ultra-fine filtering device before or during process stage 1.5, the ultra-fine filtering device is flushed with water.

4. Process water recycling method according to Claim 3, characterised in that the ultra-fine filtering device is flushed in turn with water and compressed air.

5. Process water recycling plant, especially for the process water from printing presses, in particular fountain water and wash water, comprising the following features:
5.1 a process water circuit (8, P1, 32, V3, B3, 12, P2, V18, 14) for the continuous or intermittent removal of some of the process water from the process water system (B1) of the press in question and for the supply of that portion of the process water which has been removed to an ultra-fine filtering device (F2);
5.2 the ultra-fine filtering device (F2) is designed so that the process water is broken up into filtrate and concentrate as a result of a sieve effect, without the need for chemical reagents, of which the filtrate mainly contains only all the desirable constituents of the process water and the concentrate mainly all the undesirable constituents of the process water and, if desirable or unavoidable, a proportion of the desirable constituents of the process water;
characterised by
5.3 a process water return line (22) from the filtrate side (44) of the ultra-fine filtering device (F2) to the process water system (B1) of the press in question to return the filtrate to the process water system;
5.4 a concentrate return line (18) to return the concentrate from the concentrate side (40) of the ultra-fine filtering device (F2) to the process water circuit (8, B1, F1, V3, B3, 12, P2, V18, 14) at a point where it is mixed with process water which occurs in this process water circuit and is then supplied back to the concentrate side of the ultra-fine filtering device (F2) together with this process water;
5.5 a concentrate discharge line (34) for transferring the concentrate, once a predetermined quantity or density of concentrate has been produced, from the concentration recirculation circuit to a concentrate disintegration system (B10, B11, B12);
5.6 the disintegration system contains a reaction vessel (B10) in which the concentrate is mixed with chemical disintegrants which separate the concentrate into a solid phase and a liquid clear phase;
5.7 a filtrate return line (50) for returning the liquid clear phase of the disintegration system to the process water circuit (8, P1, F1, V3, B3, 12, P2, V18, 14) which leads from the process water system (B1) to the ultra-fine filtering device (F2);
5.8 Means (V50, F10, V51, F11) for separating the solid phase from the process water recycling plant, once a set amount of solids has been obtained.

6. Process water recycling plant according to Claim 5, characterised in that there is connected to the concentrate outlet (20) from the ultra-fine filtering device (F2) a compressed air line (36), by means of which compressed air is able to force the concentrate from the concentrate discharge (20) to the process water inlet (14) out of the filtering device (F2) into an operating tank (B3) which is located in the process water circuit between the process water system (B1) and the filtering device (F2), and that a concentrate discharge line (34) leads from the bottom end of the operating tank (B3) to the disintegration system (B10, B11, B12), by means of which the concentrate can be delivered to the disintegration system.

7. Process water recycling plant according to Claim 6, characterised in that there is connected to the concentrate discharge (20) of the ultra-fine filtering device (F2) a hydraulic line (38), by means of which water from the concentrate discharge (20) to the process water inlet (14) can be delivered to the concentrate side (40) through the filtering device (F2) in order to flush this filtering device.

8. Process water recycling plant according to one of the Claims 5 to 7, characterised in that the ultra-fine filtering device (F2) is a cross-flow filter in which the process water flows over the filtering part (42) and, by means of the dynamic pressure of the process water, forces filtrate from the process water through the filtering part.

9. Process water recycling plant according to one of the Claims 5 to 8, characterised in that the ultra-fine filtering device (F2) contains a filter membrane (42) by way of filtering part.

10. Process water recycling plant according to one of the Claims 6 to 9, characterised in that one pump (P1, P2) is installed in the process water circuit upstream of the operating tank (B3) and one downstream.

11. Process water recycling plant according to one of the Claims 5 to 10, characterised in that a preliminary filter (32) is installed in the process water circuit between the process water system (B1) and the ultra-fine filtering device (F2) upstream of the point where the concentrate is delivered back to this process water circuit.

## Revendications

1. Procédé de recyclage d'eau industrielle, en particulier d'eau industrielle de machines à imprimer ou presses telle qu'en particulier, une solution de mouillage ou de l'eau de lavage, comprenant les étapes suivantes :
1.1. prélèvement continu ou discontinu d'une partie de l'eau industrielle du système d'eau industrielle de la machine concernée et amenée de la fraction d'eau industrielle prélevée à un dispositif de filtrage ultrafin;
1.2. séparation de l'eau industrielle prélevée par le dispositif de filtrage ultrafin, en filtrat et en concentrat de sorte que le filtrat ne contienne pour l'essentiel que tous les composants utiles et que le concentrat contienne pour l'essentiel tous les composants indésirables de l'eau industrielle et, si cela est souhaitable ou inévitable, une fraction des composants utiles de l'eau industrielle;
lequel procédé est caractérisé par
1.3. la recirculation du filtrat dans le système d'eau industrielle de la machine;
1.4. la recirculation du concentrat provenant du dispositif de filtrage ultrafin, sur le trajet d'écoulement d'eau industrielle qui conduit du système d'eau industrielle au dispositif de filtrage ultrafin, et l'amenée conjointe du concentrat recirculé et d'eau industrielle dans le dispositif de filtrage ultrafin, cette recirculation du concentrat et d'une fraction d'eau industrielle par le dispositif de filtrage ultrafin pouvant être répétée plusieurs fois;
1.5. l'acheminement du concentrat, quand il s'en est formé une quantité ou une densité prédéterminée, du circuit de recirculation du concentrat vers une installation de séparation;
1.6. la séparation du concentrat dans l'installation de séparation, par addition d'un agent chimique de séparation, en une phase solide et une phase liquide;
1.7. la recirculation de la phase claire liquide sur le trajet d'écoulement de l'eau industrielle qui conduit du système d'eau industrielle au dispositif de filtrage ultrafin;
1.8. l'élimination de la phase solide du procédé une fois atteinte une certaine quantité de matières solides.

2. Procédé de recyclage d'eau industrielle selon la revendication 1, caractérisé en ce que, avant le transport du concentrat selon l'étape 1.5 du procédé, le concentrat est refoulé du dispositif de filtrage ultrafin au moyen d'air comprimé, dans un récipient de travail qui se trouve sur le trajet d'écoulement de l'eau industrielle menant au dispositif de filtrage ultrafin, et en ce que le concentrat est ensuite acheminé, selon l'étape 1.5 du procédé, de ce récipient de travail vers l'installation de séparation.

3. Procédé de recyclage d'eau industrielle selon la revendication 1 ou 2, caractérisé en ce que le dispositif de filtrage ultrafin, après que le concentrat a été chassé du dispositif de filtrage ultrafin avant ou pendant l'étape 1.5 du procédé, est rincé à l'eau.

4. Procédé de recyclage d'eau industrielle selon la revendication 3, caractérisé en ce que le dispositif de filtrage ultrafin est rincé alternativement à l'eau et à l'air comprime.

5. Installation de recyclage d'eau industrielle, en particulier d'eau industrielle de machines à imprimer, en particulier de solution de mouillage et d'eau de lavage, comprenant les caractéristiques suivantes :
5.1. un trajet (8, P1, 32, V3, B3, 12, P2, V18, 14) d'écoulement de l'eau industrielle destiné au prélèvement continu ou intermittent d'une partie de l'eau industrielle dans le système d'eau industrielle (B1) de la machine concernée et amenée de la partie prélevée d'eau industrielle à un dispositif de filtrage ultrafin (F2);
5.2. le dispositif de filtrage ultrafin (F2) est conçu de sorte qu'il réalise par effet de tamis, sans qu'il faille recourir à des réactants chimiques, une séparation de l'eau industrielle en filtrat et en concentrat, le filtrat ne contenant pour l'essentiel que tous les composants utiles de l'eau industrielle et le concentrat contenant pour l'essentiel tous les composants indésirables de l'eau industrielle et, si cela est souhaitable ou inévitable, une fraction des composants utiles de l'eau industrielle;
laquelle installation est caractérisée par
5.3. une conduite (22) de recirculation de l'eau industrielle du côté filtrat (44) du dispositif de filtrage ultrafin (F2) dans le système d'eau industrielle (B1) de la machine concernée pour ramener le filtrat dans le système d'eau industrielle;
5.4. une conduite (18) de recirculation du concentrat pour recirculer le concentrat, du côté concentrat (40) du dispositif de filtrage ultrafin (F2) dans le trajet (8, B1, F1, V3, B3, 12, P2, V18, 14) d'écoulement de l'eau industrielle, en un point où se fait le mélange avec l'eau industrielle qui se trouve sur ce trajet d'écoulement de l'eau industrielle, puis ramener le mélange avec cette eau industrielle au dispositif de filtrage ultrafin (F2), du côté concentrat de celui-ci;
5.5. une conduite (34) de décharge de concentrat pour transporter le concentrat, quand il s'en est formé une quantité ou une densité prédéterminée, du circuit de recirculation du concentrat à une installation de séparation (B10, B11, B12) du concentrat;
5.6. l'installation de séparation contient un récipient de réaction (B10) dans lequel le concentrat est mélangé avec un agent chimique de séparation qui sépare chimiquement le concentrat en une phase solide et en une phase claire liquide;
5.7. une conduite (50) de recirculation du filtrat pour ramener la phase claire liquide de l'installation de séparation dans la partie (8, P1, F1, V3, B3, 12, P2, V18, 14) du circuit d'eau indusrielle qui mène du système d'eau industrielle (B1) au dispositif de filtrage ultrafin (F2);
5.8. des moyens (V50, F10, V51, F11) pour extraire la phase solide de l'installation de recyclage d'eau industrielle une fois qu'une certaine quantité de matières solides a sédimenté.

6. Installation de recyclage d'eau industrielle selon la revendication 5, caractérisée en ce que, à l'orifice (20) de sortie du concentrat du dispositif de filtrage ultrafin (F2), il y a, raccordée dans le sens d'écoulement, une conduite (36) d'air comprimé dont l'air comprimé peut chasser le concentrat en direction de l'orifice (20) de sortie du concentrat, vers l'orifice (14) d'admission d'eau industrielle, pour l'expulser du dispositif de filtrage (F2) et te ramener dans un récipient de travail (B3) qui se trouve sur le trajet d'écoulement de l'eau industrielle compris entre le système d'eau industrielle (B1) et le dispositif de filtrage (F2), et en ce que, de l'extrémité inférieure du récipient de travail (B3), une conduite (34) de décharge du concentrat mène à t'installation de séparation (B10, B11, B12), laquelle conduite peut transporter le concentrat dans l'installation de séparation.

7. Installation de recyclage d'eau industrielle selon la revendication 6, caractérisée en ce que, à l'orifice (20) de sortie du concentrat du dispositif de filtrage ultrafin (F2), il y a, raccordée dans le sens d'écoulement, une conduite (38) d'eau sous pression par laquelle de l'eau peut être acheminée de l'orifice (20) de sortie du concentrat vers l'orifice (14) d'admission d'eau industrielle du côté concentrat (40), par le dispositif de filtrage (F2), afin de rincer ce dispositif de filtrage.

8. Installation de recyclage d'eau industrielle selon l'une des revendications 5 à 7, caractérisée en ce que le dispositif de filtrage ultrafin (F2) est un filtre à flux latéral dans lequel l'eau industrielle noie l'élement de filtrage (42) et un filtrat de l'eau industrielle traverse l'élément de filtrage sous la pression dynamique exercée par l'eau industrielle.

9. Installation de recyclage d'eau industrielle selon l'une des revendications 5 à 8, caractérisée en ce que le dispositif de filtrage ultrafin (F2) contient une membrane filtrante (42) comme élément de filtrage.

10. Installation de recyclage d'eau industrielle selon l'une des revendications 6 à 9, caractérisée en ce que, en amont comme en aval du récipient de travail (B3), une pompe (P1, P2) est disposée sur le trajet d'écoulement de l'eau industrielle.

11. Installation de recyclage d'eau industrielle selon l'une des revendications 5 à 10, caractérisée en ce que sur le trajet d'écoulement de l'eau industrielle compris entre le système d'eau industrielle (B1) et le dispositif de filtrage ultrafin (F2), un préfiltre (32) est disposé en amont du point où le concentrat est recirculé sur ce trajet d'écoulement de t'eau industrielle.
